# EUROPEAN PATENT APPLICATION

(11) **EP 1 103 971 A2**
(43) Date of publication of application: **30.05.2001**
(21) Application number: 00310155.7
(22) Date of filing: 15.11.2000
(51) Int. Cl.: G11B 23/03

(54) **Disc cartridge**

(30) Priority: 24.11.1999 JP 33226399
(71) Applicant: SONY CORPORATION, Tokyo 141 (JP)
(72) Inventor: Kobayashi, Daiki, Shinagawa-ku, Tokyo (JP)
(74) Representative: Boden, Keith McMurray

(57) **Abstract**

A disc cartridge, comprising a cartridge body comprising upper and lower half members, and a recording disc rotatably received in the cartridge body. The recording disc includes a signal recording annular major area and a non-recording annular inside area. A disc holding portion is formed on at least one of the inner surfaces of the upper and lower half members. The disc holding portion has a surface which faces the non-recording annular inside area. A disc bearing member is attached to the surface of the disc holding portion to bear the non-recording annular inside area. The disc bearing member is formed of a porous material that has a high wear and abrasion resistance and a high slip characteristic.

## Description

The present invention relates to a disc cartridge which comprises a cartridge body as a housing and a disc as a recording medium rotatably installed in the cartridge body. As the recording disc, an optical disc, optical-magnetic disc and the like are widely used.

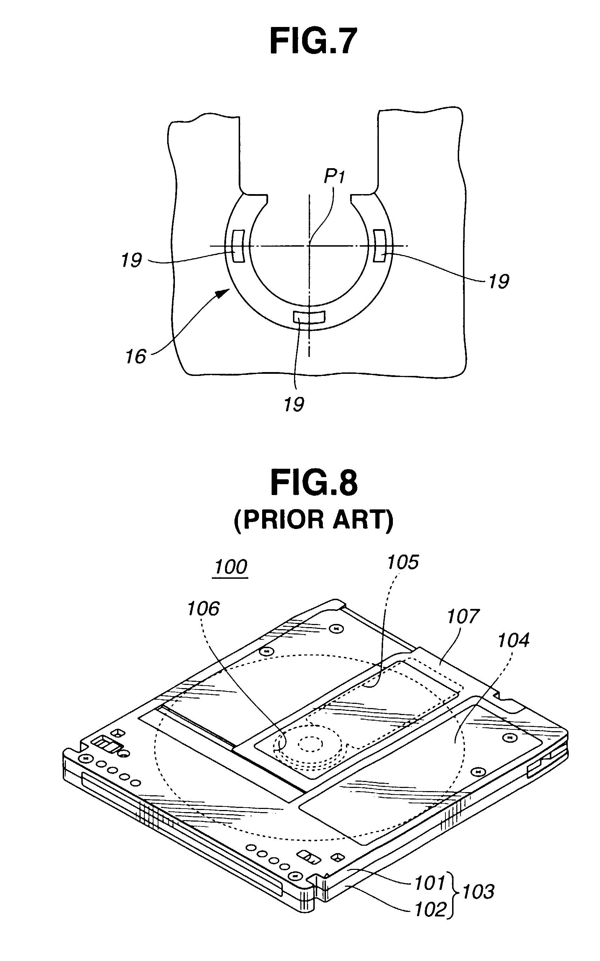

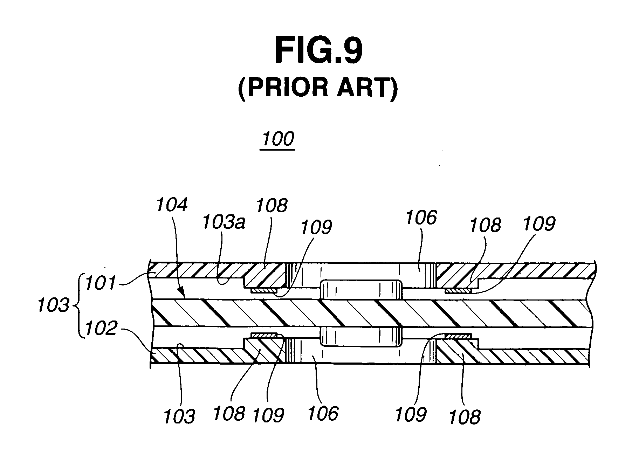

In order to clarify the task of the present invention, one conventional disc cartridge 100 will be briefly described with reference to Figs. 8 and 9 of the accompanying drawings.

As is shown in Fig. 8, the disc cartridge 100 comprises a plastic cartridge body 103 and a recording disc 104 rotatably installed in the cartridge body 103. The cartridge body 103 comprises upper and lower rectangular half members 101 and 102 that are put and coupled together. The recording disc 104 is constructed of a recording medium that can record information signals thereon. The cartridge body 103 is formed with a rectangular opening 105 and a semi-circular opening 106 which are mated with each other. That is, the semi-circular opening 106 is provided at a central portion of the cartridge body 103 and the rectangular opening 105 extends radially outward from a peripheral portion of the semi-circular opening 106. The rectangular opening 105 is used for exposing the recording disc 104 to a signal recording/reading head of a disc cartridge player, while the semi-circular opening 106 is used for receiving therein a disc table of the disc cartridge player.

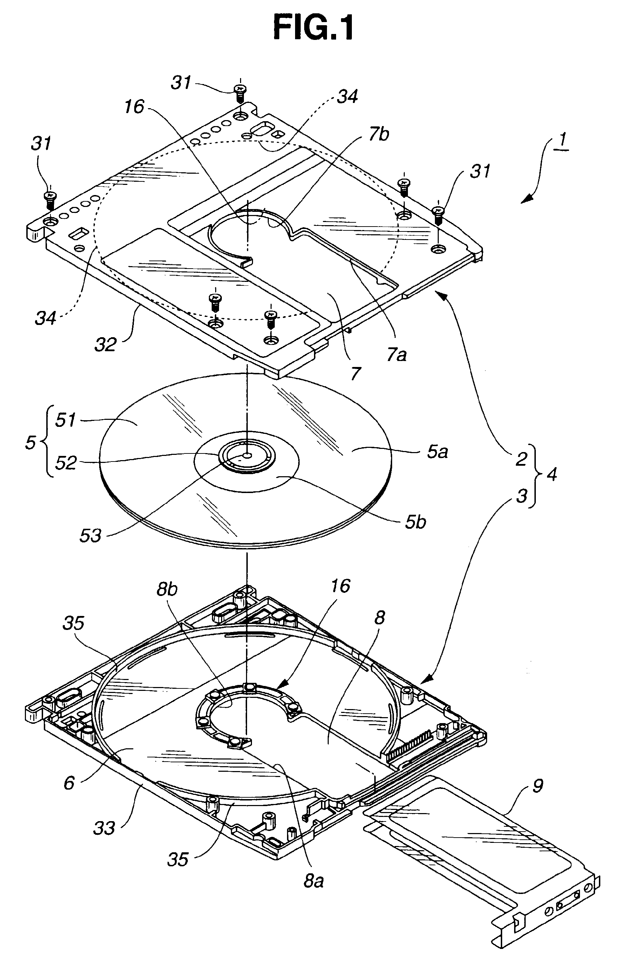

The exact structure of the merged openings 105 and 106 and the shutter member 107 may be easily understood when referring to Fig. 1.

Referring back to Fig. 8, a shutter member 107 is provided to the cartridge body 103 to selectively close and open the two merged openings 105 and 106.

As is seen from Fig. 9, upper and lower surfaces 103a and 103b of a flat interior of the cartridge body 103 are respectively formed with annular ridges or disc holding portions 108 that extend around the semi-circular opening 106. Each disc holding portion 108 has a flat top.

Onto the flat tops of these disc holding portions 108, there are bonded annular disc bearing members 109 respectively. Thus, the upper and lower disc holding portions 108 can support a non-recording annular inside area of the recording disc 104 through these two annular disc bearing members 109. These disc bearing members 109 are made of a high polymer material, such as ultrahigh molecular weight polyethylene, polytetrafluoroethylene or the like, which has a high wear and abrasion resistance and a high slip characteristic. Due to usage of such disc bearing members 109, undesired abrasion of the non-recording annular inside area of the recording disc 104, which inevitably occurs when the recording disc 104 is rotated at a high speed, can be minimized.

However, even such disc bearing members 109 as mentioned above have failed to exhibit a satisfied bearing ability when the recording disc 104 is forced to vibrate in the cartridge body 103 inducing remarkable collisions of the recording disc 104 against the disc bearing members 109. In fact, such vibration easily takes place when the disc cartridge 100 is quickly conveyed to a stand-by position in the disc cartridge player. Such vibration becomes much severe when the disc cartridge 100 is handled by a disc cartridge player of a type having a disc changing mechanism. Usually, in the disc cartridge player of this type, the motion for changing one disc cartridge 100 with another disc cartridge 100 is carried out very quickly, which brings about such vibration. Due to such vibration and thus due to the remarkable collisions of the recording disc 104 against the disc bearing members 109, undesired abrasion of the recording disc 104 becomes remarked and thus a large amount of abrasion powder is produced. As is known, production of such abrasion powder tends to cause a failure in properly recording or reading the information signals onto or from the recording disc 104.

It is therefore an aim of the present invention to provide a disc cartridge which is free of the above-mentioned drawbacks.

According to a first aspect of the present invention, there is provided a disc cartridge which comprises a cartridge body including upper and lower half members which are put and coupled together; a recording disc rotatably received in the cartridge body, the recording disc including a signal recording annular major area and a non-recording annular inside area; a disc holding portion formed on at least one of inner surfaces of the upper and lower half members, the holding portion having a top that faces the non-recording annular inside area; and a disc bearing member attached to the top of the disc holding portion to bear the non-recording annular inside area, the disc bearing member being made of a porous material that has a high wear and abrasion resistance and a high slip characteristic.

According to a second aspect of the present invention, there is provided a disc cartridge which comprises a cartridge body including upper and lower half members which are put and coupled together; a recording disc rotatably received in the cartridge body, the recording disc including a signal recording annular major area and a non-recording annular inside area; upper and lower disc holding portions respectively formed on inner surfaces of the upper and lower half members, the upper and lower disc holding portions having tops face respectively upper and lower surfaces of the non-recording annular inside area of the recording disc; disc bearing members attached to the tops of the upper and lower disc holding portions to bear the upper and lower surfaces of the non-recording annular inside area of the recording disc, wherein each of the disc bearing members is made of a porous material that has a high wear and abrasion resistance and a high slip characteristic.

Other aims and advantages of the present invention will become apparent from the following description when taken in conjunction with the accompanying drawings, in which:
Fig. 1 is an exploded view of a disc cartridge according to a preferred embodiment of the present invention;
Fig. 2 is a perspective view of a lower half member of a cartridge body;
Fig. 3 is an enlarged plan view of a disc holding portion of the lower half member;
Figs. 4A, 4B, 4C, 4D and 4E are illustrations showing a method of producing a disc bearing member;
Fig. 5 is an illustration showing a test method for testing a friction coefficient of various disc bearing members;
Fig. 6 is a view similar to Fig. 3, but showing a modification of the disc holding portion of the lower half member;
Fig. 7 is a view similar to Fig. 3, but showing another modification of the disc holding portion of the lower half member;
Fig. 8 is a perspective view of a conventional disc cartridge; and
Fig. 9 is an enlarged sectional view of the conventional disc cartridge.

Referring to Fig. 1 of the drawings, there is shown an exploded view of a disc cartridge 1 according to a preferred embodiment of the present invention.

The disc cartridge 1 comprises generally a rectangular cartridge body 4 which is made of a plastic and a recording disc 5 which is rotatably received in the cartridge body 4.

The cartridge body 4 comprises upper and lower rectangular half members 2 and 3 which are put and coupled together. For the coupling, a plurality of screw bolts 31 are used, as shown. The upper and lower rectangular half members 2 and 3 are respectively formed with generally rectangular slots 7 and 8 each extending from a central portion of the half member 2 or 3 toward a front end of the same. Each generally rectangular slot 7 or 8 comprises a semi-circular opening 7b or 8b which is formed in the central portion of the half member 2 or 3 and a rectangular opening 7a or 8a which extends outward from a peripheral portion of the semi-circular opening 7b or 8b, as shown.

The semi-circular openings 7b and 8b are used for receiving therein a disc table of a disc cartridge player (not shown), while the rectangular openings 7a and 8a are used for exposing upper and lower surfaces of the recording disc 5 to a signal recording/reading head of the disc cartridge player. Under operation of the disc cartridge player, the disc table supports a central portion of the recording disc 5 and the signal recording/reading head moves back and forth in the rectangular openings 7a and 7b for scanning the recording surface of the disc 5.

The recording disc 5 generally comprises a disc proper 51 and a hub member 52 which is installed to a central portion of the disc proper 51. The disc proper 51 comprises a signal recording annular major area 5a and a non-recording annular inside area 5b that surrounds the hub member 52.

A shutter member 9 is provided to the cartridge body 4 to selectively close and open the generally rectangular slots 7 and 8. Usually, the shutter member 9 assumes its close position due to work of a biasing spring installed therein. With this, the interior of the disc cartridge 1 is protected from surrounding dust. While, when the disc cartridge 1 is put into the disc cartridge player, the shutter member 9 is forced to move to its open position.

The upper and lower rectangular half members 2 and 3 are molded from a thermoplastic resin, such as polycarbonate or the like, which has a sufficient moldability and a satisfied mechanical strength.

Each half member 2 or 3 has a raised side wall 32 or 33 which extends along a periphery thereof. When these two half members 2 and 3 are properly coupled, these raised side walls 32 and 33 become mated to thereby to constitute a side wall of the produced disc cartridge 1.

Furthermore, each half member 2 or 3 has an annular raised wall 34 or 35 whose diameter is slightly larger than that of the recording disc 5. When the two half members 2 and 3 are coupled, these annular raised walls 34 and 35 become mated thereby to constitute an annular space in which the recording disc 5 is rotatably received. As is seen from the drawing, the periphery of the annular space is merged with the side wall of disc cartridge 1 at three points.

As is seen from Figs. 1 to 3, the inner surface of each half member 2 or 3 is formed around the semi-circular opening 7b or 8b with a semi-circular or horseshoe-shaped disc holding portion 16 that is raised toward the interior of the cartridge body 4. As is seen from Fig. 1, each disc holding portion 16 faces the non-recording annular inside area 5b of the recording disc 5. That is, when the two half members 2 and 3 are properly coupled, the two disc holding portions 16 face to each other leaving therebetween a certain space for the recording disc 5.

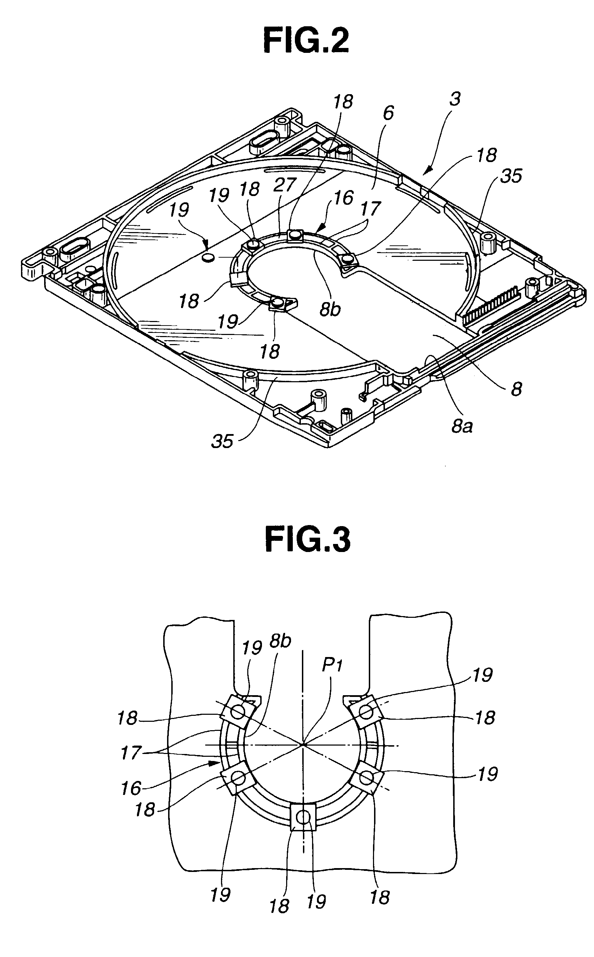

As is understood from Figs. 2 and 3, each disc holding portion 16 comprises two arcuate ribs 17 that extend in parallel around the semi-circular opening 8b or 7b. Between the two arcuate ribs 17, there is defined an arcuate groove 27. A plurality (five in the illustrated embodiment) of projections 18 are raised from the bottom of the arcuate groove 27, each having a flat top that is flush with the tops of the two arcuate ribs 17. As shown, the projections 18 are arranged at equally spaced intervals.

Onto the flat top of each projection 18, there is bonded a disc bearing member 19 which is circular in shape and has a high wear and abrasion resistance and a high slip characteristic. Thus, below the recording disc 5 in the cartridge body 4, a first group of disc bearing members 19 are arranged in a manner to face the lower surface of the disc 5, and above the recording disc 5 in the cartridge body 4, a second group of disc bearing members 19 are arranged to face the upper surface of the disc 5.

As is shown in Fig. 3, any adjacent two of the projections 18 formed on each half member 3 or 2 are spaced apart from each other by 60 degrees with respect to a center "P1" of the semi-circular opening 8b or 7b. This equally spaced arrangement of the projections 18 brings about easiness with which the disc bearing members 19 are bonded to the tops of the projections 18 automatically. That is, for such bonding, an automatic assembling device is used, that turns the half member 3 or 2 about the center "P1".

It is to be noted that the disc bearing members 19 are stamped out from an ultrahigh molecular weight polyethylene porous sheet. In the illustrated embodiment, the porosity of the sheet is 30%, the average pore size of the same is 30um and the thickness of the same is 0.1 mm.

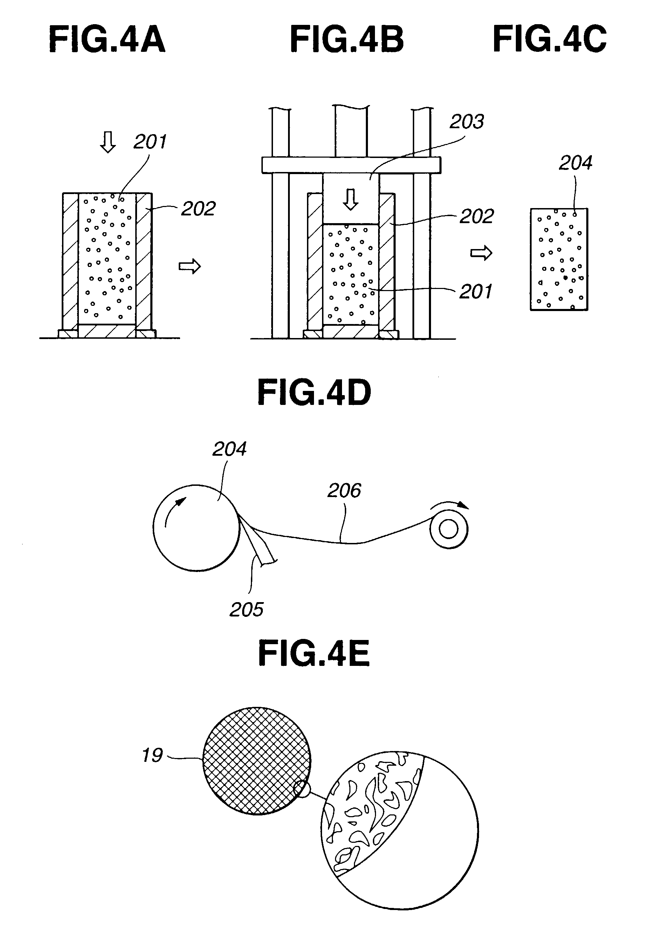

For producing the disc bearing members 19, the inventor carried out the following production steps, which are depicted in Figs. 4A to 4E.

First, an ultrahigh molecular weight polyethylene porous sheet was produced.

That is, as is seen from Fig. 4A, a female die 202 was prepared, which had a cylindrical bore. Then, powder 201 of high molecular weight polyethylene was filled into the bore of the female die 202 and heated at a certain temperature to adjust the packing density of the powder 201. Then, as is seen from Fig. 4B, the powder 201 was compacted by a male die 203 while being heated, and then the compacted powder was cooled. Then, the male die 203 was removed from the female die 202 to release the product, that is, a cylindrical compact 204 as is shown in Fig. 4C. The cylindrical compact 204 thus produced showed even porosity therethroughout and ultrahigh molecular weight.

Then, as is seen from Fig. 4D, the cylindrical compact 204 was applied to a peeling lathe 205 to produce a long sheet 206 of the porous ultrahigh molecular weight polyethylene. Then, the sheet 206 was applied to a stamping machine for producing circular disc bearing members 19. As is seen from Fig. 4E, each disc bearing member 19 showed even porosity therethroughout and ultrahigh molecular weight.

As has been mentioned hereinabove, the disc bearing members 19 are arranged to face the non-recording annular inside area 5b of the recording disc 5. That is, the first and second groups of disc bearing members 19 are arranged to face and contact the lower and upper surfaces of the non-recording annular inside area 5b of the recording disc 5.

As is seen from Fig. 1, the hub member 52 of the recording disc 5 is formed with a center opening 53. When the disc cartridge 1 is set to the stand-by position in the disc cartridge player, a center spindle of the disc table of the player is inserted into the center opening 53 and at the same time the hub member 52 of the recording disc 5 is magnetically fastened to the disc table.

For checking performance of the disc bearing member 19 used in the invention, a friction test was carried out on both the disc bearing member 19 of the invention and a conventional disc bearing member 109 (see Fig. 9). The conventional disc bearing member 109 was a circular member stamped out from a high molecular weight polyethylene sheet.

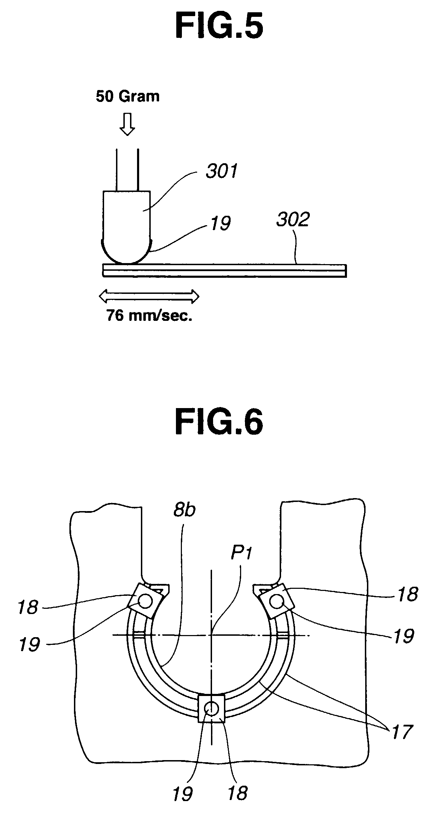

The test device for the friction test is schematically shown in Fig. 5. The test device comprises generally a pushing bar having a convex head 301 and a sliding surface 302. Two types of sliding surface 302 were used, the first being the naked surface of a 5.25-inch MO disc made of polycarbonate (PC), and the other being a protection film of ultraviolet (UV) curing resin coated on the naked surface of the MO disc. For the test, each test piece 19 or 109 was bonded to the convex head 301 and pressed against the sliding surface 302 by a force of 50 grams and the sliding surface 302 was moved reciprocatively at a speed of 76mm/sec. By this test, a friction coefficient was measured on each test piece at the times of zero (start), 10,000, 50,000 and 100,000 reciprocation.

The result of the test is shown in TABLE-1.

**TABLE-1**

| Test Piece | Contacting Surface | Friction Coefficient | | | |
|---|---|---|---|---|---|
| | | Start | 10,000 | 50,000 | 100,000 |
| Invention | PC Surface | 0.16 | 0.24 | 0.32 | 0.4 |
| | Protection Film | 0.12 | 0.16 | 0.16 | 0.2 |
| Conventional Member | PC Surface | 0.32 | 0.32 | 0.42 | 0.5 |
| | Protection Film | 0.16 | 0.48 | 0.96 | 0.64 |

As is seen from the table, against both PC surface and Protection film, the disc bearing member 19 of the invention showed a smaller friction coefficient than the conventional one 109. That is, it was revealed that the disc bearing member 19 of the invention produced only a small friction force when supporting a rotating recording disc 5.

In case of the conventional bearing member 109, burr was found in the protection film around the time of 50,000 reciprocation, that brought out a sharp increase in the friction coefficient, and around the time of 100,000 reciprocation, the friction coefficient became lowered. This lowering in friction coefficient might be caused by worn dust produced during the test. However, in case of the disc bearing member 19 of the invention, such phenomenon as that of the conventional one 109 did not occur. Furthermore, when applied to the protection film, the disc bearing member 19 of the invention always showed a lower friction coefficient than when applied to the naked PC surface of the MO disc. Furthermore, when applied to the protection film, the disc bearing member 19 showed a less increase in friction coefficient at the times of 10,000, 50,000 and 100,000 reciprocation than when applied to the naked PC surface of the MO disc. Thus, it is preferable that the non-recording annular inside area 5b of the recording disc 5 to which the disc bearing member 19 contacts is covered with such protection film of ultraviolet (UV) curing resin.

If desired, as is seen in Fig. 6, in place of the above-mentioned five projections 18, only three projections 18 may be provided which are arranged at intervals of 120 degrees with respect to the center "P1" of the semi-circular opening 8b or 7b. Of course, each projection 18 has the disc bearing member 19 bonded thereto.

Furthermore, as is seen from Fig. 7, without usage of such projections 18, the horseshoe-shaped disc holding portion 16 may have a flat top surface therethroughout onto which a plurality (three in the illustrated example) of disc bearing members 19 are bonded at spaced intervals. The disc bearing member 19 may be circular, rectangular or of any shape. Furthermore, in addition to bonding, other known measures, such as welding and the like, may be used for attaching the disc bearing member 19 to the flat top surface of the horseshoe-shaped disc holding portion 16.

In the above description, it has been described that the porous material of the disc bearing member 19 is an ultrahigh molecular weight polyethylene. However, in the present invention, other materials may be also used for the porous material of the disc bearing member 19, which are for example polytetrafluoroethlene, sintered type of this plastic and the like. In view of the damping characteristic and resiliency that are largely affected by the thickness of the disc bearing member 19, the porosity of the porous ultrahigh molecular weight material should be from 20% to 50%, preferably from 25% (1/4) to 35% (about 1/3), that corresponds to the porosity possessed by a compressed sheet having a half thickness.

Furthermore, in the foregoing description, two disc holding portions 16 are provided for holding the recording disc 5. However, if desired, only one disc holding portion 16 may be provided depending on the atmosphere where the disc cartridge 1 is practically used.

Although the invention has been described above with reference to its preferred embodiment, the invention is not limited to such embodiment as described above. Various modifications and variations of such embodiment may be carried out by those skilled in the art, in light of the above description.

## Claims

1. A disc cartridge, comprising:
a cartridge body comprising upper and lower half members;
a recording disc rotatably received in said cartridge body, said recording disc including a signal recording annular major area and a non-recording annular inside area;
a disc holding portion formed on at least one of the inner surfaces of said upper and lower half members, said disc holding portion having a surface which faces said non-recording annular inside area; and
a disc bearing member attached to said surface of said disc holding portion to bear said non-recording annular inside area, said disc bearing member being formed of a porous material that has a high wear and abrasion resistance and a high slip characteristic.

2. A disc cartridge as claimed in Claim 1, in which said porous material is a porous sheet of ultrahigh molecular weight polyethylene.

3. A disc cartridge as claimed in Claim 1, in which said porous material is a porous sheet of polytetrafluoroethylene.

4. A disc cartridge as claimed in Claim 1, in which the porosity of said porous material ranges from 20% to 50%.

5. A disc cartridge as claimed in Claim 1, in which said non-recording annular inside area of said recording disc is covered with a protection film of ultraviolet curing resin.

6. A disc cartridge, comprising:
a cartridge body comprising upper and lower half members;
a recording disc rotatably received in said cartridge body, said recording disc including a signal recording annular major area and a non-recording annular inside area;
upper and lower disc holding portions respectively formed on the inner surfaces of said upper and lower half members, said upper and lower disc holding portions each having a surface which faces a respective one of the upper and lower surfaces of said non-recording annular inside area of said recording disc; and
disc bearing members attached to said surfaces of said upper and lower disc holding portions to bear said upper and lower surfaces of said non-recording annular inside area of said recording disc;
wherein each of said disc bearing members is formed of a porous material that has a high wear and abrasion resistance and a high slip characteristic.

7. A disc cartridge as claimed in Claim 6, in which each of said disc bearing members is a member stamped out from an ultrahigh molecular weight polyethylene porous sheet.

8. A disc cartridge as claimed in Claim 7, in which said ultrahigh molecular weight polyethylene porous sheet is produced by the steps of:
(a) heating and compacting a predetermined amount of powder of high molecular weight polyethylene to produce a shaped compact of porous ultrahigh molecular weight polyethylene; and
(b) peeling said shaped compact to produce a long sheet of porous ultrahigh molecular weight polyethylene.
